# EUROPEAN PATENT APPLICATION

(11) **EP 2 541 007 A1**
(43) Date of publication of application: **02.01.2013**
(21) Application number: 11747386.8
(22) Date of filing: 23.02.2011
(51) Int. Cl.: F01N 3/08

(54) **BREATHER PIPE STRUCTURE FOR A LIQUID REDUCTANT STORAGE TANK**

(30) Priority: 26.02.2010 JP 2010042743
(71) Applicant: Isuzu Motors, Ltd., Tokyo 140-8722 (JP)
(72) Inventor: AMAGASAKI Shin, Fujisawa-shi Kanagawa 252-8501 (JP); MITO Takuya, Fujisawa-shi Kanagawa 252-8501 (JP); KODAIRA Kazuhiro, Fujisawa-shi Kanagawa 252-8501 (JP); TOZUKA Akihiro, Fujisawa-shi Kanagawa 252-8501 (JP)
(74) Representative: Schaumburg, Thoenes, Thurn, Landskron, Eckert
(86) International application number: PCT/JP2011/053982
(87) International publication number: WO 2011/105426

(57) **Abstract**

Provided is a breather pipe structure for a liquid reducing agent storage tank which is capable of introducing/discharging air according to changes of liquid amount in the liquid reducing agent storage tank and capable of controlling the full-tank liquid surface level during injection of a liquid reductant. In the breather pipe structure for a liquid reducing agent storage tank (10) which stores a liquid reducing agent (5) and which has a breather pipe (20) attached on top of the tank for introducing/discharging air, a lower end (20c) of the breather pipe (20) extending downward from the top of the liquid reducing agent storage tank (10) is positioned at a level corresponding to the liquid surface level when the tank is full.

## Description

### TECHNICAL FIELD

This invention relates to a liquid reducing agent storage tank for storing a liquid reducing agent for reducing NOx in engine exhaust gas, and in particular to a breather pipe structure for a liquid reducing agent storage tank for introducing/discharging air according to an amount of liquid stored in the liquid reducing agent storage tank.

### BACKGROUND ART

Exhaust gas purification systems which have been developed for purifying NOx in diesel engine exhaust gas include, for example, a urea SCR system using a selective catalytic reduction (SCR) (see, for example, Patent Documents 1 and 2).

This urea SCR system is configured to supply an aqueous urea solution (with a urea concentration of 32.5%), for example, serving as a liquid reducing agent to an upstream part in the direction of exhaust gas flow in a SCR device, so that urea is hydrolyzed to generate ammonia by heat of the exhaust gas, and NOx is reduced by this ammonia on a SCR catalyst.

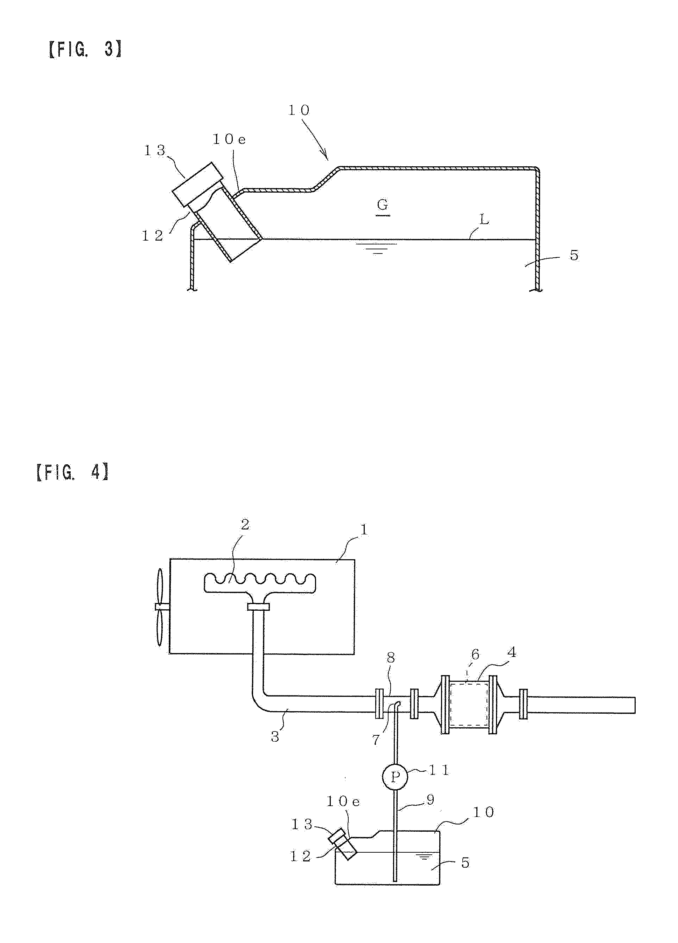

As shown in Fig. 4, an exhaust pipe 3 is connected to an exhaust manifold 2 of a diesel engine 1. A SCR device 4 for NOx reduction is connected to the middle of the exhaust pipe 3, and a reducing agent supply pipe section 8 having an injection nozzle 7 for supplying a liquid reducing agent (urea aqueous solution) 5 to a SCR catalyst 6 in the SCR device 4 is connected to an upstream part in the direction of exhaust gas flow in the SCR device 4.

A liquid reducing agent storage tank 10 is connected to the injection nozzle 7 of the reducing agent supply pipe section 8 via a liquid reducing agent supply pipe 9. This liquid reducing agent storage tank 10 is configured to pressure feed the liquid reducing agent 5 from a liquid feeding pump 11 to the injection nozzle 7 via the liquid reducing agent supply pipe 9.

The liquid reducing agent storage tank 10 is provided with a filler pipe 12, so that the tank 10 is refilled with the liquid reducing agent 5 through the filler pipe 12 after removing a cap 13 provided on the filler pipe 12.

This liquid reducing agent storage tank 10 is installed in a small place on a side of a vehicle in the vicinity of the exhaust pipe 3, and the filler pipe 12 is attached to an upper edge 10e of the liquid reducing agent storage tank 10 on the vehicle side such that the filler pipe 12 is inclined obliquely upward to facilitate the injection of the liquid reducing agent 5.

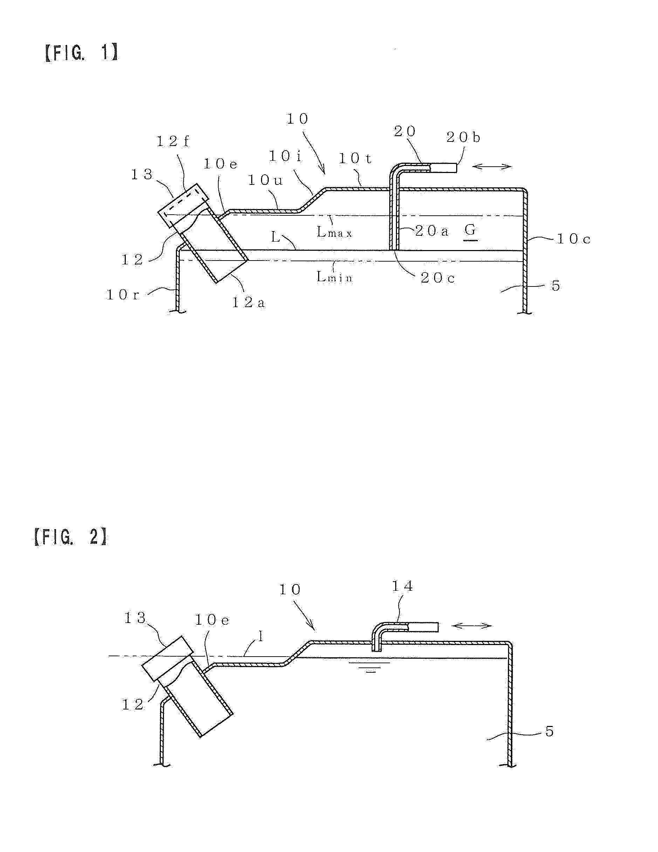

As shown in Fig. 2, a breather pipe 14 is provided on top of the liquid reducing agent storage tank 10 in order to introduce and discharge air into and from the tank according to change of the liquid surface level in the tank.

### PRIOR ART DOCUMENTS

### PATENT DOCUMENTS

Patent Document 1: Japanese Patent Application Laid-open No. 2000-27627
Patent Document 2: Japanese Patent Application Laid-open No. 2005-83223A

### DISCLOSURE OF THE INVENTION

### PROBLEM TO BE SOLVED BY THE INVENTION

However, when the structure in which air is introduced and discharged through the breather pipe 14 is employed, the liquid reducing agent 5 may possibly be injected excessively to surpass the full tank capacity due to the way the filler pipe 12 is attached to the liquid reducing agent storage tank 10, and excessive injection will possibly cause a problem that the liquid surface of the liquid reducing agent 5 rises as indicated by the two-dot chain line 1 in Fig. 2 and the liquid reducing agent 5 overflows from the filler pipe 12.

On the other hand, in the case of a liquid reducing agent storage tank 10 not provided with a breather pipe as shown in Fig. 3, a hermetically sealed state will be established in a gas-phase region G in the tank when the liquid reducing agent 5 is injected from the filler pipe 12 until the lower end of the filler pipe 12 is closed by the liquid surface L. Even if the liquid reducing agent 5 is tried to be further injected into the tank, the injection is impossible due to increase of pressure in the gas-phase region G. Thus, the liquid reducing agent 5 cannot be injected in excess of a full-tank liquid capacity. Further, if the liquid surface level L descends, the pressure in the gas-phase region G in the tank will drop to atmospheric pressure or below, which may possibly cause a depression in the tank shape.

It is therefore an object of this invention to solve the aforementioned problems and to provide a breather pipe structure for a liquid reducing agent storage tank which is capable of introducing/discharging air according to changes of liquid amount in the liquid reducing agent storage tank, and furthermore capable of controlling the full-tank liquid surface level during injection of the liquid reducing agent.

### MEANS FOR SOLVING THE PROBLEM

In order to achieve the object described above, this invention provides a breather pipe structure for a liquid reducing agent storage tank which stores a liquid reducing agent and which has a breather pipe for introducing/discharging air attached on top of the liquid reducing agent storage tank, wherein a lower end of the breather pipe extending downward from the top of the liquid reducing agent storage tank is positioned at a level corresponding to a level of the liquid surface level when the tank is full.

In this invention, the liquid reducing agent storage tank has a filler pipe arranged on its upper edge so as to extend obliquely upward, and the lower end of the breather pipe is positioned above a lower open end of the filler pipe and below an upper-end inlet of the filler pipe. The breather pipe may be formed to have an inner diameter that is sufficiently smaller than the inner diameter of the filler pipe. A lower part of the breather pipe extends vertically from the topwall of the liquid reducing agent storage tank to the inside of the tank, while an upper part of the breather pipe extends vertically upward from the topwall of the liquid reducing agent storage tank and is then bent horizontally, and the front end thereof is open to the atmosphere.

### EFFECT OF THE INVENTION

According to this invention, the lower end of the breather pipe is positioned at a full-tank liquid surface level, whereby the lower end of the breather pipe is closed when the liquid surface reaches the full-tank liquid surface level during injection of the liquid reducing agent so that the injection of the liquid reducing agent is made impossible. Thus, the invention offers an advantageous effect that the full-tank liquid surface level can be controlled automatically.

### BRIEF DESCRIPTION OF THE DRAWINGS

Fig. 1 is a cross-sectional view showing an embodiment of this invention.
Fig. 2 is a cross-sectional view showing a conventional liquid reducing agent storage tank having a breather pipe.
Fig. 3 is a cross-sectional view showing a conventional liquid reducing agent storage tank having no breather pipe.
Fig. 4 is a diagram illustrating a urea SCR system to which a liquid reducing agent storage tank is applied.

### BEST MODE FOR CARRYING OUT THE INVENTION

A preferred embodiment of this invention will be described in detail with reference to the accompanying drawings.

Fig. 1 is a diagram showing an embodiment of a breather pipe structure for a liquid reducing agent storage tank according to the invention.

Although omitted in Fig. 1, a liquid reducing agent storage tank 10 is provided with a liquid reducing agent supply pipe, and is configured as described in relation to Fig. 4 so that a liquid reducing agent 5 is pressure fed from a liquid feeding pump 11 to an injection nozzle 7 via a liquid reducing agent supply pipe 9 and the liquid reducing agent 5 consisting of a urea aqueous solution (with a concentration of 32. 5%) can be injected to the upstream side of the SCR device 4.

Although in Fig. 1 only an upper part of the liquid reducing agent storage tank 10 is shown while a lower part being omitted, a sidewall 10r on the left side as viewed in Fig. 1 is located on the right side (or on the left side) of a vehicle, while a sidewall 10c on the right side is located on a center side of the vehicle. The upper part of the liquid reducing agent storage tank 10 has a topwall 10t on its center side. An upper face portion 10u which is slightly lower than the topwall 10t is formed to extend from the topwall 10t toward the right side (or the left side) via an inclined portion 10i. A filler pipe 12 for injection of the liquid reducing agent 5 is provided at an upper edge 10e between the upper face portion 10u and the left-side sidewall 10r such that the filler pipe 12 is inclined obliquely upward by about 45 degrees, and a cap 13 is attached to close an inlet 12f of the filler pipe 12 by being screwed, for example.

In this invention, a breather pipe 20 is provided in the topwall 10t (alternatively, in the upper face portion 10u) of the liquid reducing agent storage tank 10, while a lower end 20c of the breather pipe section 20a extending vertically downward from the topwall is positioned at a level corresponding to a level of the liquid surface when the tank is full. This breather pipe 20 is formed to have an inner diameter that is sufficiently smaller than an inner diameter of the filler pipe 12 and will not adversely affect the introduction and discharge of air.

The position of the lower end 20c of the breather pipe 20 is set to be equal to or higher than the liquid surface level Lₘᵢₙ where the lower open end 12a of the filler pipe 12 is closed with the liquid, and to be equal to or lower than the liquid surface level Lₘₐₓ where the liquid overflows from the inlet 12f at the upper end of the filler pipe 12, and this position of the lower end 20c is defined as the full-tank level.

The breather pipe 20 is formed to rise vertically from the top of the liquid reducing agent storage tank 10 and then is bent horizontally. The distal end 20b of the breather pipe 20 is opened to atmosphere so that air is introduced and discharged.

Next, functions of the invention will be described.

In order to refill the liquid reducing agent storage tank 10 with the liquid reducing agent 5, the cap 13 is opened and the liquid reducing agent 5 is injected through the filler pipe 12. This injection causes air in the gas-phase region G of the liquid reducing agent storage tank 10 to be discharged through the breather pipe 20 or through the filler pipe 12. Once the surface level of the liquid reducing agent 5 reaches the liquid surface level Lₘᵢₙ, the lower open end 12a of the filler pipe 12 is closed. Since the lower end 20c of the breather pipe 20 is still above the liquid surface level Lₘᵢₙ at this time, the gas-phase region G is not hermetically sealed and air can be discharged through the breather pipe 20.

When the liquid surface L reaches the lower end 20c, the breather pipe 20 is closed and the gas-phase region G is hermetically sealed, whereby injection of the liquid reducing agent 5 is made impossible. Thus, the level of the full-tank liquid surface can be controlled. Further, the liquid surface L of the liquid reducing agent 5 is formed also within the filler pipe 12, which allows an operator to recognize that the tank is full and to stop injection of the liquid reducing agent 5.

When the urea SCR system is being operated by a SCR device, the liquid reducing agent 5 is supplied to upstream of the SCR device, and the liquid surface L of the liquid reducing agent 5 in the liquid reducing agent storage tank 10 descends. Nevertheless, the pressure in the liquid reducing agent storage tank 10 is maintained at the atmospheric pressure since air is supplied into the gas-phase region G through the breather pipe 20.

According to this invention as described above, air can be externally introduced or discharged through the breather pipe 20 according to changes of the level of liquid surface L of the liquid reducing agent 5 in the liquid reducing agent storage tank 10. Furthermore, since the lower end 20c of the breather pipe 20 is closed by the liquid surface L when the tank is refilled with the liquid reducing agent 5, the level of the full-tank liquid surface can be controlled.

### EXPLANATION OF REFERENCE NUMERALS

- 5: Liquid reducing agent
- 10: Liquid reducing agent storage tank
- 20: Breather pipe
- 20c: Lower end

## Claims

1. A breather pipe structure for a liquid reducing agent storage tank which stores a liquid reducing agent and which has a breather pipe for introducing/discharging air attached on top of the liquid reducing agent storage tank, wherein
a lower end of the breather pipe extending downward from the top of the liquid reducing agent storage tank is positioned at a level corresponding to a level of the liquid surface when the tank is full.

2. The breather pipe structure for a liquid reducing agent storage tank according to claim 1, wherein
the liquid reducing agent storage tank has a filler pipe arranged on its upper edge so as to extend obliquely upward, and
the lower end of the breather pipe is positioned above a lower open end of the filler pipe and below an upper-end inlet of the filler pipe.

3. The breather pipe structure for a liquid reducing agent storage tank according to claim 1, wherein the breather pipe is formed to have an inner diameter that is sufficiently smaller than the inner diameter of the filler pipe.

4. The breather pipe structure for a liquid reducing agent storage tank according to claim 3, wherein a lower part of the breather pipe extends vertically from the topwall of the liquid reducing agent storage tank to the inside of the tank while an upper part of the breather pipe extends vertically upward from the topwall of the liquid reducing agent storage tank and then is bent horizontally, and the front end of the breather pipe is open to the atmosphere.
